# EUROPÄISCHE PATENTSCHRIFT

(11) **EP 1 319 886 B1**
(45) Veröffentlichungstag und Bekanntmachung des Hinweises auf die Patenterteilung: **28.12.2005**
(21) Anmeldenummer: 02024355.6
(22) Anmeldetag: 02.11.2002
(51) Int. Cl.: F16P 3/14

(54) **Schutzeinrichtung für Maschinen, wie Biegepressen, Schneidemaschinen, Stanzmaschinen oder dergleichen**
Protective device for machines such as bending presses, cutting machines, punching machines or the like
Dispositif de protection pour machines telles que presses-plieuses, découpeuses, machines à éstamper ou analogues

(30) Priorität: 13.12.2001 DE 10161222; 19.07.2002 DE 10232795
(43) Veröffentlichungstag der Anmeldung: 18.06.2003
(73) Patentinhaber: Fiessler Elektronik GmbH & Co. KG, 73734 Esslingen (DE)
(72) Erfinder: Fiessler, Lutz, Dr., 73773 Aichwald (DE)
(74) Vertreter: Vetter, Hans

(56) Entgegenhaltungen:
- EP-A- 0 146 460
- EP-B- 0 264 349
- WO-A-97/25568
- DE-A- 19 717 299
- DE-B- 2 750 234
- PATENT ABSTRACTS OF JAPAN vol. 1997, no. 11, 28. November 1997 (1997-11-28) -& JP 09 192744 A (AMADA CO LTD), 29. Juli 1997 (1997-07-29)

## Beschreibung

Die Erfindung betrifft eine Schutzeinrichtung für Maschinen, wie Biegepressen, Schneidemaschinen, Stanzmaschinen oder dergleichen, bei denen ein erstes Maschinenteil Arbeitsbewegungen gegen ein zweites Maschinenteil ausführt, mit einer am ersten Maschinenteil mittels einer Halteeinrichtung angebrachten und in der Arbeitsbewegungsrichtung relativ zu diesem verstellbaren Lichtschrankenanordnung, insbesondere Laser-Lichtschrankenanordnung, die wenigstens eine Lichtschranke besitzt, deren Lichtstrahl senkrecht zur Arbeitsbewegungsrichtung verläuft und in einer einstellbaren Sicherheitsposition einen Sicherheitsabstand zu diesem Maschinenteil in Richtung des anderen Maschinenteils aufweist, und mit einer bei Unterbrechung des Lichtstrahls die Arbeitsbewegung stoppenden Blockiereinrichtung.

Derartige Schutzeinrichtungen sind beispielsweise aus der DE 2750234 B1, der DE 19717299 A1, der WO 97/25568, der EP 0264349 B1 oder der EP 0146460 A2 bekannt und dienen dazu, in erster Linie die Bedienungsperson zu schützen und zu verhindern, dass beispielsweise eine Hand zwischen den beiden Maschinenteilen bzw. Werkzeugen eingeklemmt oder verletzt wird. Selbstverständlich kann die Lichtschrankenanordnung auch verhindern, dass durch das sich bewegende erste Maschinenteil unabsichtlich zwischen ihm und dem zweiten Maschinenteil gelangte Gegenstände beschädigt oder zerstört werden, wobei auch eine Selbstzerstörung oder -beschädigung verhindert wird. Bei den bekannten Schutzeinrichtungen würde am Ende der Schließbewegung das erste Maschinenteil kurz vor Erreichen des zu bearbeitenden Werkstücks zum Stehen kommen, da der Laserstrahl unterbrochen würde, wenn sich das erste Maschinenteil bis auf den Sicherheitsabstand dem Werkstück genähert hat. Um dies zu verhindern, wird bei den bekannten Schutzeinrichtungen die Lichtschrankenanordnung gegen Ende der Schließbewegung deaktiviert. Dies kann nur deshalb in Kauf genommen werden, da gleichzeitig von der gefährlichen Eilgeschwindigkeit auf eine ungefährlichere Schleichgeschwindigkeit umgeschaltet wird. Bei Maschinen, die keine Geschwindigkeitsumschaltung durchführen, ist eine solche Deaktivierung nicht zulässig, und die Schutzeinrichtung muss während der gesamten Schließbewegung aktiv bleiben.

Eine Aufgabe der vorliegenden Erfindung besteht somit darin, eine Schutzeinrichtung für Maschinen zu schaffen, bei denen das erste Maschinenteil seine Schließbewegung gegen das zweite Maschinenteil mit unveränderter Geschwindigkeit ausführt, wobei die Schutzeinrichtung während der gesamten Schließbewegung aktiv bleiben soll.

Diese Aufgabe wird erfindungsgemäß dadurch gelöst, dass am zweiten Maschinenteil eine eine Lichtstrahlunterbrechung durch ein dort angeordnetes Werkstück verhindernde Anschlaganordnung für die Lichtschrankenanordnung angeordnet ist, dass die Halteeinrichtung ein die Weiterbewegung des ersten Maschinenteils relativ zur Lichtschrankenanordnung nach Erreichen der Anschlagposition gestattendes Spiel besitzt und dass die Lichtschrankenanordnung entweder derart seitlich versetzt angeordnet ist, dass eine Lichtstrahlunterbrechung durch das erste Maschinenteil bei dieser Weiterbewegung ausgeschlossen ist, oder am ersten Maschinenteil in der Arbeitsbewegungsbahn desselben angeordnet ist, wobei eine durch Erreichen der Anschlagposition auslösbare Schalteinrichtung zur Deaktivierung der wenigstens einen Lichtschranke ausgebildet ist.

Bei der erfindungsgemäßen Schutzeinrichtung sorgt die Anschlaganordnung in vorteilhafter Weise dafür, dass die Lichtschrankenanordnung vor Erreichen des am zweiten Maschinenteil angeordneten Werkstücks stoppt, so dass das Werkstück keine Lichtstrahlunterbrechung bewirken kann. Durch das Spiel in der Halteeinrichtung kann sich dabei das obere Maschinenteil weiterbewegen und die Schließbewegung vollenden, ohne dass es selbst bei dieser Weiterbewegung den Lichtstrahl unterbricht, da die Lichtschrankenanordnung seitlich versetzt zur Bewegungsbahn des ersten Maschinenteils angeordnet ist. Dadurch kann die Schutzeinrichtung während der gesamten Schließzeit aktiv bleiben und die Gefahr von Verletzungen oder Beschädigungen verhindern. Die Schließgeschwindigkeit muss nicht begrenzt werden, was zu einer einfacheren Steuerung und zu schnelleren Arbeitsbewegungen bzw. einem schnelleren Arbeitstakt führt. In der alternativen Ausgestaltung, bei der die Lichtschrankenanordnung unterhalb des ersten Maschinenteils in der Arbeitsbewegungsbahn desselben angeordnet ist, sorgt die Schalteinrichtung zur Deaktivierung dafür, dass die wenigstens eine Lichtschranke nicht durch das erste Maschinenteil bei dessen Weiterbewegung unterbrochen wird. Auch diese Lösung hat den Vorteil, dass die Schließgeschwindigkeit nicht begrenzt werden muss.

Durch die in den Unteransprüchen aufgeführten Maßnahmen sind vorteilhafte Weiterbildungen und Verbesserungen der im Anspruch 1 angegebenen Schutzeinrichtung möglich.

In vorteilhafter Weise sind Kraftmittel zum Halten der Lichtschrankenanordnung in der Sicherheitsposition mit einer vorgebbaren Kraft vorgesehen, insbesondere Federkraft, Schwerkraft, Magnetkraft und/oder fluidische Kraft. Am Ende der Schließbewegung nach Erreichen der Anschlagposition wird somit die Lichtschrankenanordnung gegen die Kraft der Kraftmittel relativ zum ersten Maschinenteil verschoben und bei der Rückbewegung automatisch wieder in die Sicherheitsposition zurückgeführt.

In einer besonders geeigneten konstruktiven Ausgestaltung weist die Halteeinrichtung zwei die Lichtschrankenanordnung tragende Führungsstangen auf, die parallel zur Arbeitsbewegungsrichtung in am ersten Maschinenteil angeordneten Halteelementen verschiebbar geführt sind, und dass die Verschiebung begrenzende Anschlagmittel vorgesehen sind, wobei eine Anschlagposition die Sicherheitsposition der Lichtschrankenanordnung vorgibt und die Führungsstangen in dieser Anschlagposition durch die Kraftmittel gehalten werden. Hierdurch wird sichergestellt, dass die Sicherheitsposition exakt eingehalten und bei der Rückbewegung des ersten Maschinenteils wiederhergestellt wird.

In einer weiteren vorteilhaften Ausgestaltung sind die Anschlagmittel durch Überwindung der Haftreibungskraft einer Klemmvorrichtung oder einer lösbaren Verrastung verschiebbar ausgebildet, wobei die Haftreibungskraft bzw. Entrastungskraft vorzugsweise größer als die Haltekraft der Kraftmittel ist. Dies hat den Vorteil, dass beim Auswechseln des ersten Maschinenteils oder eines entsprechenden Werkzeugs oder eines am ersten Maschinenteil angebrachten Werkzeugs bei der ersten Arbeitsbewegung eine vollautomatische Justierung der Lichtschrankenanordnung relativ zum neuen Werkzeug durchgeführt werden kann. Hierzu wird zunächst der Abstand zwischen Lichtschrankenanordnung und erstem Maschinenteil in einer Grobeinstellung zu groß eingestellt. Erreicht die Lichtschrankenanordnung bei der ersten Schließbewegung die Anschlagposition, so erfolgt zunächst eine Relativbewegung gegen die Kraft der Kraftmittel, und dann werden die Anschlagmittel durch Überwindung der Haftreibungskraft oder Verrastung so lange verschoben, bis die Schließbewegung vollendet ist. Die Justierung ist dann vollautomatisch abgeschlossen.

Zur Erhöhung der Sicherheit kann die Lichtschrankenanordnung mehrere Lichtschranken in zwei in der Arbeitsbewegungsrichtung und/oder senkrecht zu dieser hintereinander angeordneten Ebenen aufweisen. Die Anzahl und der Abstand der Lichtschranken zueinander und der Abstand zum ersten Maschinenteil hängt vom Bremsweg und der Bremszeit der Maschine und der auftretenden Geschwindigkeit ab. In einer Ebene vorgelagerte Lichtschranken verhindern, dass beispielsweise Finger noch kurz vor dem Ende der Schließbewegung in den Gefahrenbereich eindringen können, bevor die Schließbewegung angehalten ist. Ihr Abstand zur Gefahrenstelle hängt wiederum von der Bremszeit der Maschine und von der Geschwindigkeit der auf dem zweiten Maschinenteil bzw. dem Werkstück rutschenden Hand ab. Für besondere Anwendungen kann eine solche vorgelagerte Lichtschranke oder können solche Lichtschranken auch deaktiviert werden.

Die Lichtschrankenanordnung kann zweckmäßigerweise noch eine weitere, in der Bewegungsbahn des ersten Maschinenteils angeordnete Lichtschranke besitzen, die nach korrekter Positionierung der Lichtschrankenanordnung deaktivierbar ist. Diese weitere Lichtschranke verhindert in vorteilhafter Weise, dass die Schließbewegung ausgelöst werden kann, wenn nach einem Wechsel von einem niedrigen zu einem hohen ersten Maschinenteil bzw. daran angeordneten Werkzeug vergessen wurde, die Schutzeinrichtung wieder richtig zu positionieren. Diese weitere Lichtschranke kann vorzugsweise durch Schaltmittel in oder an der Anschlaganordnung beim Auftreffen der Lichtschrankenanordnung deaktiviert werden Dies kann prinzipiell auch durch Signale aus der Maschinensteuerung bewirkt werden.

In vorteilhafter Weise besitzt die Schalteinrichtung Mittel zur Auslösung der sequentiellen Deaktivierung der unterhalb des ersten Maschinenteils angeordneten Lichtschranken beim Erreichen der Anschlagposition, wobei die Deaktivierung bei der dem ersten Maschinenteil nächsten Lichtschranke beginnt. Hierdurch wird immer nur diejenige Lichtschranke kurz vor dem Zeitpunkt deaktiviert, zu dem das erste Maschinenteil eine Unterbrechung bewirken würde. Dies führt dazu, dass der kleiner werdende Spalt zwischen den beiden Maschinenteilen praktisch bis zuletzt gesichert ist.

Einen zusätzlichen Schutz bildet eine vorgelagerte weitere Lichtschrankenanordnung, die seitlich versetzt zu der wenigstens einen unterhalb des ersten Maschinenteils angeordneten Lichtschrankenanordnung angeordnet ist. Diese zusätzliche Lichtschrankenanordnung verhindert, dass Finger noch kurz vor dem Ende der Schließbewegung in den Gefahrenbereich eindringen können, bevor die Schließbewegung angehalten wird. Für die Bearbeitung von speziellen Werkstückgeometrien kann diese weitere Lichtschrankenanordnung mit Hilfe von Abschaltmitteln deaktiviert werden. Damit die Abwahl nicht dauernd erfolgt, sind automatische Einschaltmittel zur Aktivierung dieser deaktivierten weiteren Lichtschrankenanordnung vorgesehen, die insbesondere durch die Öffnungsbewegung des ersten Maschinenteils oder durch Endschalter an der Anschlagvorrichtung oder dergleichen auslösbar sind.

Ausführungsbeispiele der Erfindung sind in der Zeichnung dargestellt und in der nachfolgenden Beschreibung näher erläutert. Es zeigen:
- Fig. 1: eine Längsseitenansicht einer mit einer Sicherheitseinrichtung versehenen Biegepresse im hochgefahrenen Zustand des oberen Maschinenteils,
- Fig. 2: dieselbe Biegepresse im beinahe geschlossenen Zustand, wenn die Lichtschrankenanordnung ihre Anschlagposition erreicht,
- Fig. 3: dieselbe Biegepresse im vollständig geschlossenen Zustand,
- Fig. 4: eine Querseitenansicht der Anordnung und Position eines ersten Ausführungsbeispiels einer Lichtschrankenanordnung gemäß Fig. 1,
- Fig. 5: eine Querseitenansicht der Anordnung und Position des ersten Ausführungsbeispiels einer Lichtschrankenanordnung gemäß Fig. 2,
- Fig. 6: eine Querseitenansicht der Anordnung und Position des ersten Ausführungsbeispiels einer Lichtschrankenanordnung gemäß Fig. 3,
- Fig. 7: die Biegepresse nach einer Werkzeugauswechslung vor der Justierung der Lichtschrankenanordnung,
- Fig. 8: eine Querseitenansicht der Anordnung und Position eines zweiten Ausführungsbeispiels einer Lichtschrankenanordnung gemäß Fig. 1,
- Fig. 9: eine Querseitenansicht der Anordnung und Position des zweiten Ausführungsbeispiels einer Lichtschrankenanordnung gemäß Fig. 2 und
- Fig. 10: eine Querseitenansicht der Anordnung und Position des zweiten Ausführungsbeispiels einer Lichtschrankenanordnung gemäß Fig. 3.

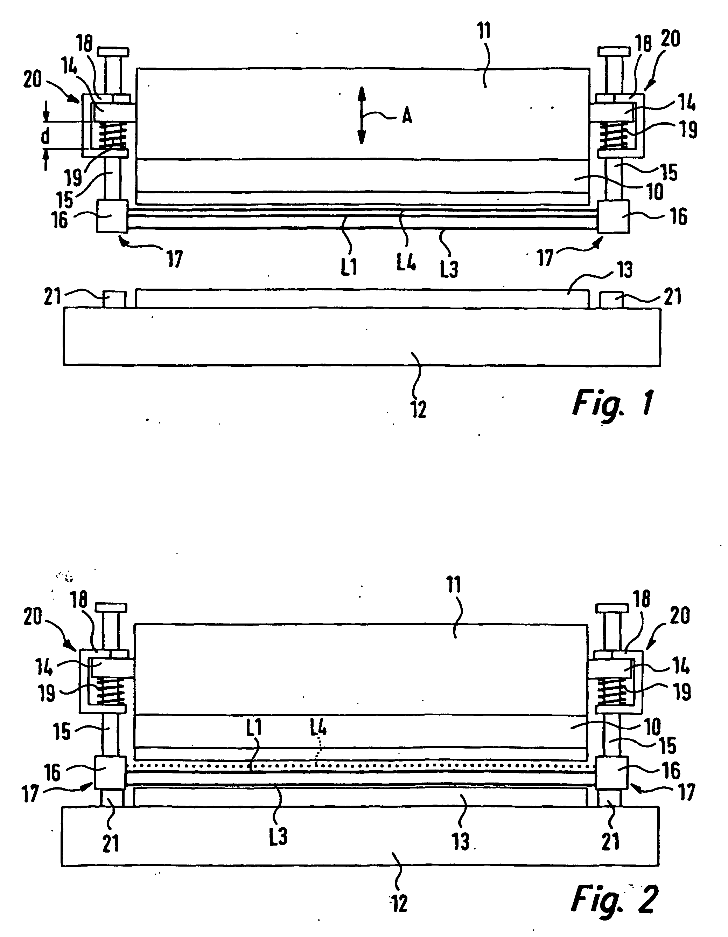

Die in den Figuren dargestellte Biegepresse besteht im Wesentlichen aus einem mit einem Oberwerkzeug 10, auch Stempel genannt, versehenen oberen Maschinenteil 11, das gegen ein auf einem feststehenden unteren Maschinenteil 12 liegendes Werkstück 13 bewegbar ist. Die Bewegungsrichtung ist in Fig. 1 durch einen Doppelpfeil A kenntlich gemacht. Bei dem Werkstück 13 kann es sich beispielsweise um ein zu biegendes bzw. abzukantendes Blech handeln. Prinzipiell kann in einer alternativen Ausführung auch das obere Maschinenteil 11 feststehend und das untere Maschinenteil 12 bewegbar ausgebildet sein.

Die übrigen Bereiche der an sich bekannten Biegepresse sind zur Vereinfachung nicht dargestellt. Die Querschnittsgestalt des Oberwerkzeugs 10 und gegebenenfalls eines Unterwerkzeugs am unteren Maschinenteil 12 können je nach Anwendung variieren. Es wird hierzu beispielsweise auf den eingangs angegebenen Stand der Technik hingewiesen.

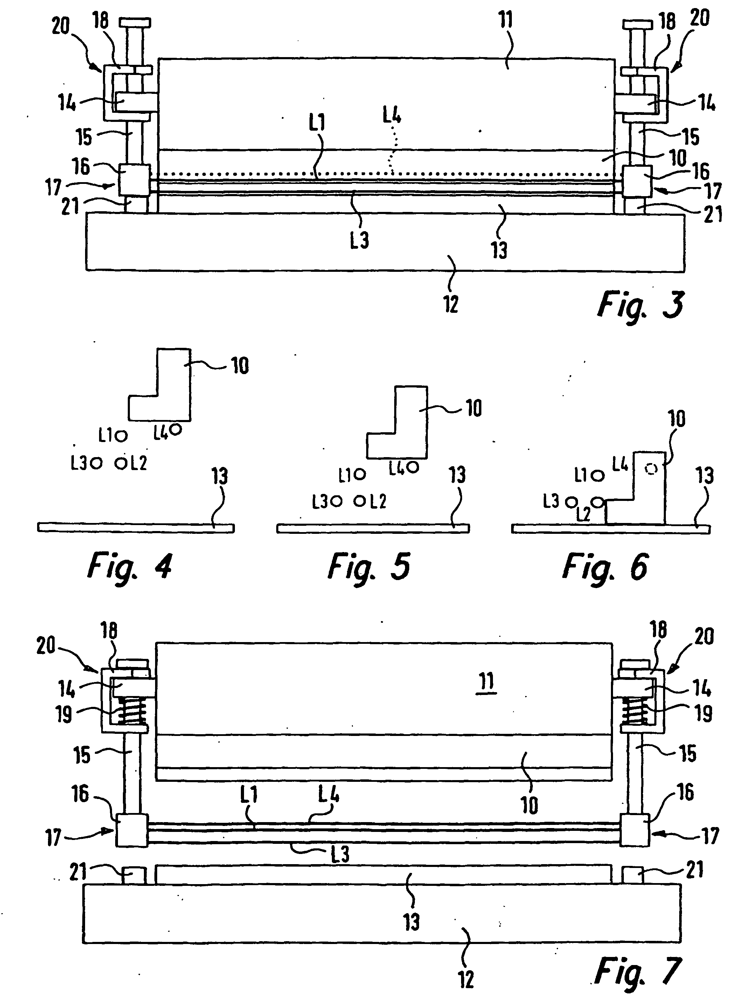

Jeweils an den einander entgegengesetzten Schmalseiten des oberen Maschinenteils 11 sind Halteelemente 14 angeordnet, die als Vertikalführungen für Führungsstangen 15 dienen. Die beiden Führungsstangen tragen jeweils an ihrem unteren Endbereich Teilbereiche 16 einer Lichtschrankenanordnung 17. Hierbei handelt es sich um eine Laser-Lichtschrankenanordnung, wobei prinzipiell auch andere Arten von Lichtschranken eingesetzt werden können. Beim ersten Ausführungsbeispiel handelt es sich um vier Lichtschranken, deren Lichtstrahlen L1 - L4 (gemäß den Fig. 4 bis 6) parallel zur Längsrichtung des Oberwerkzeugs 10 verlaufen. Dabei sind nicht näher dargestellte Lichtsender und Lichtempfänger in den beiden Teilbereichen 16 der Lichtschrankenanordnung 17 angeordnet.

Bei den Führungsstangen 15 sind jeweils U-förmige Anschlagelemente 18 befestigt, die die Halteelemente 14 umgreifen. Der Innenabstand zwischen den Schenkeln der U-förmigen Anschlagelemente 18 ist um einen Betrag d größer als die Höhe der Halteelemente 14, so dass sich die Führungsstangen 15 und damit die Lichtschrankenanordnung um diesen Betrag d relativ zum oberen Maschinenteil 11 auf- und abbewegen können. Mittels Druckfedern 19 und durch Schwerkraft werden die Halteelemente 14 am oberen Anschlag der Anschlagelemente 18 gehalten. Die Federkraft der Druckfeder 19 ist dabei so bemessen, dass diese Anschlagposition auch bei Maschinenschwingungen oder -stößen erhalten bleibt. In einer einfacheren Ausführung kann diese Halteposition unter Wegfall der Druckfeder 19 auch allein durch Schwerkraft gehalten werden.

In einer alternativen Ausführung können auch beispielsweise U-förmige Halteelemente am oberen Maschinenteil 11 angeordnet sein, die als Führung für die Führungsstangen 15 dienen. Als Anschlagelemente dienen dann zwischen den U-Schenkeln an den Führungsstangen 15 angeklemmte Klemmteile, die mittels der Führungsstangen 15 zwischen den U-Schenkeln auf- und abbewegbar sind. Die Anschlagposition während der Abwärtsbewegung des oberen Maschinenteils ist dann die am unteren Schenkel und kann allein mittels Schwerkraft und/oder mittels von oben her angreifenden Druckfedern gehalten werden.

Beim ersten Ausführungsbeispiel sind gemäß den Fig. 4 bis 6 drei Lichtschranken so angeordnet, dass ihre Lichtstrahlen L1 - L3 gegenüber dem vertikalen Verfahrweg des Oberwerkzeugs 10 nach vorne, also zur Bedienperson hin, versetzt sind. Die Zahl derartiger Lichtschranken kann auch größer oder kleiner sein, im einfachsten Falle ist eine einzige, dem Lichtstrahl L2 zugeordnete Lichtschranke vorgesehen. Kriterium für die Anzahl und den Abstand der Lichtschranken zueinander zum Oberwerkzeug 10 ist der Bremsweg und die Bremszeit der Maschine nach einer etwaigen Abschaltung durch Unterbrechung eines Lichtstrahls. Weiterhin geht die Keilförmigkeit und die Geschwindigkeit der auf dem Werkstück rutschenden Hand der Bedienperson und die notwendige Erkennung der Finger beispielsweise in den Abstand zwischen L2 und L3 ein. Der Strahlabstand zwischen L1 und L2 einerseits und L2 und L3 andererseits beträgt beispielsweise zwischen 4 und 14 mm. Die vorgelagerte Lichtschranke, die den Lichtstrahl L3 erzeugt, verhindert, dass Finger noch kurz vor dem Ende der Schließbewegung in den Gefahrenbereich eindringen können, bevor die Schließbewegung stoppt. Für die Bearbeitung von speziellen Werkstückgeometrien kann die vorgelagerte Lichtschranke mit ihrem Lichtstrahl L3 beispielsweise durch eine Zusatzfunktion oder Schaltmittel abgewählt werden. Damit die Abwahl nicht dauernd erfolgt, kann die Abwahl nach jeder Schließbewegung des oberen Maschinenteils 11 zum Beispiel durch die Öffnungsbewegung oder andere Maschinensignale aufgehoben werden. Die Funktion der sich in der Bewegungsbahn des Oberwerkzeugs 10 befindlichen, den Lichtstrahl L4 erzeugenden Lichtschranke wird später noch erläutert.

Gemäß den Fig. 1 und 4 ist die Lichtschrankenanordnung 17 so justiert, dass sich der Lichtstrahl L1 in einer Ebene unmittelbar unterhalb des untersten Bereichs des Oberwerkzeugs 10 befindet und die Lichtstrahlen L2 und L3 wiederum gemäß den obigen Vorgaben in einer Ebene darunter liegen. Diese Justierung erfolgt mittels der aus den Halteelementen 14, den Führungsstangen 15 und den Anschlagelementen 18 bestehenden Halteeinrichtung 20. Zunächst wird gemäß Fig. 7 ein größerer Abstand zwischen der Lichtschrankenanordnung 17 und dem Oberwerkzeug 10 eingestellt. Bei einer ersten Schließbewegung fährt das obere Maschinenteil 11 nach unten, bis die Lichtschrankenanordnung 17 in Anschlag mit am unteren Maschinenteil 12 angeordneten Anschlagelementen 21 gelangt. Die Höhe dieser Anschlagelemente 21 ist veränderbar und wird so eingestellt, dass keiner der Lichtstrahlen durch das Werkstück 13 unterbrochen wird. Bei der weiteren Bewegung des oberen Maschinenteils 11 nach unten werden die Halteelemente 14 gegen die Kraft der Druckfeder 19 bis zum unteren Anschlag der Anschlagelemente 18 bewegt. Danach werden die an den Führungsstangen 15 angeklemmten Anschlagelemente 18 unter Überwindung der Klemmkraft nach unten bewegt, bis das Oberwerkzeug 10 das Werkstück 13 erreicht oder gegebenenfalls bei einigen Anwendungen in dieses eindringt und dort seine Endposition erreicht. Die Klemmkraft der Anschlagelemente 18 an den Führungsstangen 15 ist dabei größer als die Federkraft der Druckfeder 19. Bei der Öffnungsbewegung, also beim nachfolgenden Hochfahren des oberen Maschinenteils 11, werden zunächst die Halteelemente 14 durch die Kraft der Druckfeder 19 bis zum oberen Anschlag der Anschlagelemente 18 bewegt. In dieser Position befindet sich die Lichtschrankenanordnung 17 in der gewünschten Position und relativ zum Oberwerkzeug 10, wie dies in Fig. 1 dargestellt ist. Der korrekte Abstand wird durch den Weg d in den U-förmigen Anschlagelementen 18 bestimmt.

Alternativ zur Anklemmung der Anschlagelemente 18 an die Führungsstangen 15 können diese Führungsstangen 15 beispielsweise eine Rastzahnung aufweisen, in die ein Rastelement der Anschlagelemente 18, beispielsweise eine federbelastete Rastkugel eingreift. Anstelle der Klemmkraft tritt bei dieser Ausführung die Überwindung der Verrastungskraft die wiederum größer sein muss als die Federkraft der Druckfeder 19.

Die normale Schließbewegung des oberen Maschinenteils 11 bzw. des Oberwerkzeugs 10 ist in den Fig. 1 bis 3 bzw. in den entsprechenden Fig. 4 bis 6 dargestellt. Ausgehend von der Position gemäß Fig. 1 fährt das obere Maschinenteil 11 und damit das Oberwerkzeug 10 vertikal in der Pfeilrichtung A nach unten, wobei die Lichtschrankenanordnung 17 entsprechend mitgeführt wird. Wird einer der Lichtstrahlen L1 - L3 durch ein Hindernis, beispielsweise eine Hand der Bedienungsperson oder einen unerwünscht in der Bewegungsbahn sich befindenden Gegenstand, unterbrochen, so erfolgt eine Sicherheitsabschaltung der Bewegung. Im anderen Falle erfolgt die Abwärtsbewegung, bis gemäß Fig. 2 die Lichtschrankenanordnung 17 auf den Anschlagelementen 21 auftrifft. Bei der Weiterbewegung des Oberwerkzeugs 10 werden die Halteelemente 14 gegen die Kraft der Druckfeder 19 nach unten verschoben, während die Lichtschrankenanordnung 17 ihre Höhenposition beibehält. Der Schließvorgang endet mit dem Auftreffen des Oberwerkzeugs 10 auf dem Werkstück 13 bzw. im Falle einer Schneidemaschine mit der unteren Endposition des Oberwerkzeugs 10. Die Lichtstrahlen L1 - L3 werden dabei nicht unterbrochen, da sie relativ zur Bewegungsbahn des Oberwerkzeugs 10 nach vorne versetzt sind. Sie bleiben somit während der gesamten Schließbewegung aktiv.

Die Öffnungs- bzw. Rückwärtsbewegung erfolgt in der umgekehrten Reihenfolge und wurde in Verbindung mit dem Justiervorgang bereits beschrieben.

Die zusätzliche, direkt unterhalb des Oberwerkzeugs 10 angeordnete Lichtschranke mit dem Lichtstrahl L4 verhindert, dass eine Schließbewegung ausgelöst werden kann, wenn nach einem Wechsel von einem niedrigen zu einem hohen Oberwerkzeug 10 vergessen wurde, die Schutzeinrichtung wieder richtig zu positionieren. Diese Lichtschranke mit dem Lichtstrahl L4 kann beispielsweise durch die Endschalter deaktiviert werden, die beim Auftreffen der Lichtschrankenanordnung 17 auf dem Anschlagelemente 21 betätigt werden. Diese Deaktivierung kann beispielsweise auch durch Signale aus der Maschinensteuerung erfolgen, beispielsweise durch in der Abhängigkeit von der Öffnungsbewegung stehende Signale. Für das Biegen von beispielsweise kastenförmigen Teilen kann diese zusätzliche Lichtschranke ebenfalls deaktiviert werden. Damit diese Deaktivierung nicht dauernd aufrecht erhalten bleibt, kann die Abwahl beispielsweise nach jeder Schließbewegung durch die genannten Endschalter oder durch Signale der Maschinensteuerung aufgehoben werden.

Zur Erhöhung der Sicherheit kann die mit der Schutzeinrichtung versehene Maschine auch beispielsweise nur dann eingeschaltet werden, wenn alle Lichtschranken eingeschaltet bzw. aktiviert sind.

Alternative Anordnungen und Ausgestaltungen der Lichtschranken können beispielsweise gemäß der eingangs genannten DE 19717299 A1 erfolgen.

Die beschriebene Schutzeinrichtung ist selbstverständlich nicht auf Biegepressen, Schneidemaschinen und Stanzmaschinen beschränkt, sondern kann überall dort eingesetzt werden, wo zwei Maschinenteile Arbeitsbewegungen gegeneinander ausführen, so dass dazwischen sich befindliche Körperteile oder andere Gegenstände verletzt bzw. beschädigt werden können. Beispielsweise kann die erfindungsgemäße Schutzeinrichtung auch für sich schließende Türen oder Klappen oder Schieber, Hobelmaschinen u.a. eingesetzt werden.

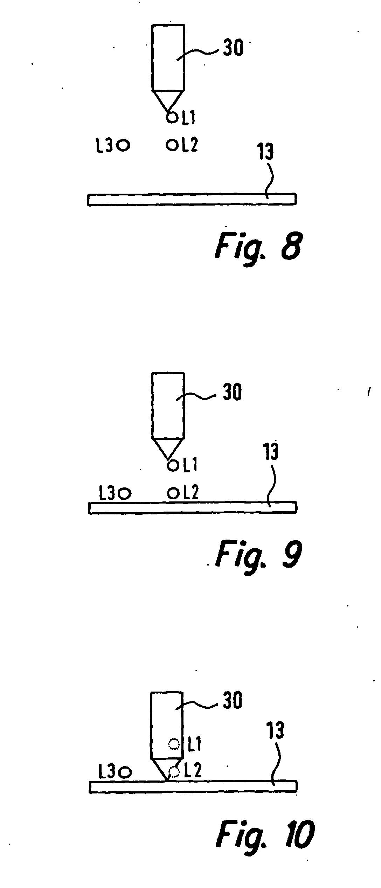

Die Lichtschrankenanordnung 17 gemäß den Figuren 1 bis 3 kann in einem zweiten Ausführungsbeispiel auch die in den Figuren 8 bis 10 dargestellte Anordnung aufweisen. Das Oberwerkzeug 30 weist dabei eine gegenüber dem ersten Ausführungsbeispiel geänderte Gestalt auf. Prinzipiell kann das Oberwerkzeug je nach durchzuführendem Arbeitsvorgang und Werkstück eine entsprechende Gestalt besitzen. Die Lichtstrahlen L1 und L2 der Lichtschrankenanordnung 17 sind gegenüber dem ersten Ausführungsbeispiel so versetzt, dass sie untereinander unterhalb des Oberwerkzeugs 30 in dessen Arbeitsbewegungsbahn angeordnet sind. Dabei befindet sich der Lichtstrahl L1 unmittelbar unterhalb des Oberwerkzeugs 30.

Ausgehend von der Position gemäß Figur 8 fährt das obere Maschinenteil 11 bzw. das Oberwerkzeug 30 vertikal nach unten, wobei die Lichtschrankenanordnung 17 wie beim ersten Ausführungsbeispiel entsprechend mitgeführt wird. Die Abwärtsbewegung erfolgt solange, bis gemäß Figur 9 die Lichtschrankenanordnung 17 auf den Anschlagelementen 21 auftrifft. Bei der Weiterbewegung des Oberwerkzeugs 10 werden die Halteelemente 14 wiederum gegen die Kraft der Druckfeder nach unten verschoben, während die Lichtschrankenanordnung 17 ihre Höhenposition beibehält. Dabei würde zunächst der Lichtstrahl L1 durch das Oberwerkzeug 30 unterbrochen. Dies verhindert eine nicht näher dargestellte Schalteinrichtung, die bei Erreichen der Anschlagposition ausgelöst wird und zunächst die oberste Lichtschranke (Lichtstrahl L1) deaktiviert. Kurz darauf wird auch der Lichtstrahl L2 der darunter liegenden Lichtschranke deaktiviert, so dass auch eine die Bewegung stoppende Unterbrechung bei Erreichen des Werkstücks 13 gemäß Figur 10 unterbleibt. Die Zahl der übereinander angeordneten Lichtschranken bzw. Lichtstrahlen kann auch größer oder kleiner sein. Bei einer einzigen Lichtschranke erfolgt die Deaktivierung bei Erreichen der Anschlagposition, während bei mehreren Lichtschranken eine sequentielle Deaktivierung von oben nach unten erfolgt, so, dass keine Unterbrechung durch das von oben kommende Oberwerkzeug erfolgt. Dieses kann dadurch die volle Arbeitsgeschwindigkeit beibehalten. Die sequentielle Deaktivierung kann entweder zeitlich oder wegabhängig gesteuert werden.

Die Lichtschranke zum Lichtstrahl L1 kann zusätzlich die Funktion des Lichtschranke L4 des ersten Ausführungsbeispiels übernehmen. Die Funktion der Lichtschranke zum Lichtstrahl L3 entspricht prinzipiell der des ersten Ausführungsbeispiels.

## Patentansprüche

1. Schutzeinrichtung für Maschinen, wie Biegepressen, Schneidemaschinen, Stanzmaschinen oder dergleichen, bei denen ein erstes Maschinenteil (11) Arbeitsbewegungen gegen ein zweites Maschinenteil (12) ausführt, mit einer am ersten Maschinenteil mittels einer Halteeinrichtung (20) angebrachten und in der Arbeitsbewegungsrichtung relativ zu diesem verstellbaren Lichtschrankenanordnung (17), insbesondere Laser-Lichtschrankenanordnung, die wenigstens eine Lichtschranke besitzt, deren Lichtstrahl senkrecht zur Arbeitsbewegungsrichtung verläuft und in einer einstellbaren Sicherheitsposition einen Sicherheitsabstand zu diesem Maschinenteil in Richtung des anderen Maschinenteils aufweist, und mit einer bei Unterbrechung des Lichtstrahls die Arbeitsbewegung stoppenden Blockiereinrichtung, **dadurch gekennzeichnet, dass** am zweiten Maschinenteil (12) eine eine Lichtstrahlunterbrechung durch ein dort angeordnetes Werkstück (13) verhindernde Anschlaganordnung (21) für die Lichtschrankenanordnung (17) angeordnet ist, dass die Halteeinrichtung (20) ein die Weiterbewegung des ersten Maschinenteils (11) relativ zur Lichtschrankenanordnung (17) nach Erreichen der Anschlagposition gestattendes Spiel besitzt, und dass die Lichtschrankenanordnung (17) entweder derart seitlich versetzt angeordnet ist, dass eine Lichtstrahlunterbrechung durch das erste Maschinenteil (11) bei dieser Weiterbewegung ausgeschlossen ist, oder am ersten Maschinenteil (11) in der Arbeitsbewegungsbahn desselben angeordnet ist, wobei eine durch Erreichen der Anschlagposition auslösbare Schalteinrichtung zur Deaktivierung der wenigstens einen Lichtschranke (L1, L2) ausgebildet ist.

2. Schutzeinrichtung nach Anspruch 1, **dadurch gekennzeichnet, dass** Kraftmittel (19) zum Halten der Lichtschrankenanordnung (17) in der Sicherheitsposition mit einer vorgebbaren Kraft vorgesehen sind, insbesondere Federkraft, Schwerkraft, Magnetkraft und/oder fluidische Kraft.

3. Schutzeinrichtung nach Anspruch 2, **dadurch gekennzeichnet, dass** die Halteeinrichtung (20) zwei die Lichtschrankenanordnung (17) tragende Führungsstangen (15) aufweist, die parallel zur Arbeitsbewegungsrichtung (A) in am ersten Maschinenteil (11) angeordneten Halteelementen (14) verschiebbar geführt sind, dass die Verschiebung begrenzende Anschlagmittel (18) vorgesehen sind, wobei eine Anschlagposition die Sicherheitsposition der Lichtschrankenanordnung (17) vorgibt und die Führungsstangen (15) in dieser Anschlagposition durch die Kraftmittel (19) gehalten werden.

4. Schutzeinrichtung nach Anspruch 3, **dadurch gekennzeichnet, dass** die Anschlagmittel (18) durch Überwindung der Haftreibungskraft einer Klemmvorrichtung oder einer lösbaren Verrastung verschiebbar ausgebildet sind.

5. Schutzeinrichtung nach Anspruch 3 und 4, **dadurch gekennzeichnet, dass** die Haftreibungskraft oder Entrastungskraft größer als die Haltekraft der Kraftmittel (19) ist.

6. Schutzeinrichtung nach einem der vorhergehenden Ansprüche, **dadurch gekennzeichnet, dass** die Lichtschrankenanordnung (17) wenigsten zwei Lichtschranken (L1 - L3) in zwei in der Arbeitsbewegungsrichtung (A) und/oder senkrecht zu dieser hintereinander angeordneten Ebenen aufweist.

7. Schutzeinrichtung nach einem der vorhergehenden Ansprüche, **dadurch gekennzeichnet, dass** die Lichtschrankenanordnung (17) eine weitere in der Bewegungsbahn des ersten Maschinenteils (11) oder eines daran angebrachten Werkzeugs (10) angeordnete Lichtschranke (L4) besitzt, die nach korrekter Positionierung der Lichtschrankenanordnung (17) deaktivierbar ist.

8. Schutzeinrichtung nach Anspruch 7, **dadurch gekennzeichnet, dass** die Anschlaganordnung (21) Schaltmittel zum Deaktivieren der weiteren Lichtschranke (L4) beim Auftreffen der Lichtschrankenanordnung (17) besitzt.

9. Schutzeinrichtung nach Anspruch 6, **dadurch gekennzeichnet, dass** die Schalteinrichtung Mittel zur Auslösung der sequentiellen Deaktivierung der unterhalb des ersten Maschinenteils (11) angeordneten Lichtschranken (L1, L2) beim Erreichen der Anschlagposition besitzt, wobei die Deaktivierung bei der dem ersten Maschinenteil (11) nächsten Lichtschranke (L1) beginnt.

10. Schutzeinrichtung nach einem der vorhergehenden Ansprüche, **dadurch gekennzeichnet, dass** eine weitere, aus wenigstens einer Lichtschranke (L3) bestehende Lichtschrankenanordnung seitlich versetzt zu der wenigstens einen unterhalb des ersten Maschinenteils (11) angeordneten Lichtschranke (L1, L2) angeordnet ist, und dass Abschaltmittel zur Deaktivierung dieser weiteren Lichtschrankenanordnung (L3) vorgesehen sind.

11. Schutzeinrichtung nach Anspruch 10, **dadurch gekennzeichnet, dass** automatische Einschaltmittel zur Aktivierung der deaktivierten weiteren Lichtschrankenanordnung (L3) vorgesehen sind, die insbesondere durch die Öffnungsbewegung des ersten Maschinenteils (11) oder durch Endschalter an der Anschlagvorrichtung auslösbar sind.

## Claims

1. Safety device for machines, such as such as bending presses, cutting machines, stamping machines or the like, in which a first machine part (11) executes operating movements against a second machine part (12), with a photoelectric barrier unit (17), in particular a laser photoelectric barrier unit, attached to the first machine part by means of a holding fixture (20) and adjustable relative to this machine part in the direction of operating movement, and having at least one photoelectric barrier with a light beam running at right-angles to the direction of operating movement and having, in an adjustable safe position, a safety clearance from this machine part in the direction of the other machine part, and with an interlocking device which stops the operating movement when the light beam is interrupted, **characterised in that** there is provided on the second machine part (12) a stop unit (21) for the photoelectric barrier unit (17) to prevent interruption of the light beam by a workpiece (13) positioned there, by providing that the holding fixture (20) has a degree of play which allows further movement of the first machine part (11) relative to the photoelectric barrier unit (17) after reaching the stop position, and that the photoelectric barrier unit (17) is either placed offset to the side in such a way that there is no possibility of interruption of the light beam by the first machine part (11) during this further movement, or that the photoelectric barrier unit is mounted on the first machine part (11) in its operating movement path, wherein a switching device to deactivate the photoelectric barrier or barriers (L1, L2) is formed and may be triggered on reaching the stop position.

2. Safety device according to claim 1, **characterised in that** force means (19) are provided to hold the photoelectric barrier unit (17) in the safe position with a presettable force, in particular spring force, force of gravity, magnetic force and/or fluidic force.

3. Safety device according to claim 2, **characterised in that** the holding fixture (20) has two guide rods (15) supporting the photoelectric barrier unit (17) and slidably guided parallel to the direction of operating movement (A) in holding elements (14) located on the first machine part (11), that stop elements (18) limiting the sliding movement are provided, wherein one stop position presets the safe position of the photoelectric barrier unit (17), and the guide rods (15) are held in this stop position by the force means (19).

4. Safety device according to claim 3, **characterised in that** the stop elements (18) are designed to slide by overcoming the static friction force of a clamping device or a releasable engagement.

5. Safety device according to claim 3 and 4, **characterised in that** the static friction force or disengaging force is greater than the holding force of the force means (19).

6. Safety device according to any of the preceding claims, **characterised in that** the photoelectric barrier unit (17) has at least two photoelectric barriers (L1 - L3) in two planes arranged consecutively in the direction of operating movement (A) and/or at right-angles to the latter.

7. Safety device according to any of the preceding claims, **characterised in that** the photoelectric barrier unit (17) has a further photoelectric barrier (L4) arranged in the movement path of the first machine part (11) or a tool (10) attached thereto, which may be deactivated after correct positioning of the photoelectric barrier unit (17).

8. Safety device according to claim 7, **characterised in that** the stop unit (21) has switching means to deactivate the additional photoelectric barrier (L4) when contact is made by the photoelectric barrier unit (17).

9. Safety device according to claim 6, **characterised in that** the switching device has means of actuating the sequential deactivation of the photoelectric barriers (L1, L2) mounted below the first machine part (11) on reaching the stop position, wherein the deactivation begins with the photoelectric barrier (L1) nearest the first machine part (11).

10. Safety device according to any of the preceding claims, **characterised in that** an additional photoelectric barrier unit comprising at least one photoelectric barrier (L3) is mounted offset to the side of the photoelectric barrier or barriers (L1, L2) mounted below the first machine part (11), and that cut-off means are provided to deactivate this additional photoelectric barrier unit (L3).

11. Safety device according to claim 10, **characterised in that** automatic switch-on means are provided to activate the deactivated additional photoelectric barrier unit (L3), and are actuable in particular through the opening movement of the first machine part (11) or by the limit switch on the stop unit.

## Revendications

1. Dispositif de protection pour machines, telles que presses à cintrer, machines à découper, machines à estamper ou similaires, dans lesquelles une première partie de machine (11) exécute des mouvements de travail par rapport à une deuxième partie de machine (12), comportant un agencement de barrières lumineuses (17) placé au moyen d'un dispositif de maintien (20) sur la première partie de machine et déplaçable par rapport à celle-ci dans la direction du mouvement de travail, en particulier un agencement de barrières lumineuses à laser, qui possède au moins une barrière lumineuse dont le rayon lumineux s'étend perpendiculairement à la direction du mouvement de travail et présente, dans une position de sécurité réglable, une distance de sécurité par rapport à cette partie de machine, en direction de l'autre partie de machine, et comportant un dispositif de blocage stoppant le mouvement de travail en cas d'interruption du rayon lumineux, **caractérisé en ce que** sur la deuxième partie de machine (12) il est prévu un dispositif de butée (21), empêchant une interruption du rayon lumineux par une pièce (13) disposée à cet endroit, pour l'agencement de barrières lumineuses (17), **en ce que** le dispositif de maintien (20) présente un jeu autorisant la poursuite du mouvement de la première partie de machine (11) par rapport à l'agencement de barrières lumineuses (17), après qu'est atteinte la position de butée, et **en ce que** l'agencement de barrières lumineuses (17) est soit disposé décalé latéralement de manière qu'une interruption du rayon lumineux par la première partie de machine (11) soit exclue lors de cette poursuite du mouvement, soit disposé sur la première partie de machine (11) dans la trajectoire de déplacement de celle-ci, un dispositif de commutation, qui peut être déclenché lorsqu'est atteinte la position de butée, étant conçu pour désactiver la au moins une barrière lumineuse (L1, L2).

2. Dispositif de protection selon la revendication 1, **caractérisé en ce que** sont prévus des moyens exerçant une force (19) pour maintenir l'agencement de barrières lumineuses (17) dans la position de sécurité avec une force prédéfinie, en particulier une force de ressort, une force de gravité, une force magnétique et/ou une force fluidique.

3. Dispositif de protection selon la revendication 2, **caractérisé en ce que** le dispositif de maintien (20) comporte deux colonnes de guidage (15) portant l'agencement de barrières lumineuses (17), lesquelles sont guidées de manière à pouvoir coulisser parallèlement à la direction du mouvement de travail (A) dans des éléments de maintien (14) disposés sur la première partie de machine (11), **en ce que** sont prévus des moyens de butée (18) limitant le coulissement, une position de butée définissant la position de sécurité de l'agencement de barrières lumineuses (17), et les colonnes de guidage (15) étant maintenues dans cette position de butée par les moyens exerçant une force (19).

4. Dispositif de protection selon la revendication 3, **caractérisé en ce que** les moyens de butée (18) sont réalisés coulissants par dépassement de la force de friction par adhérence d'un dispositif de serrage ou d'un accrochage déverrouillable.

5. Dispositif de protection selon les revendications 3 et 4, **caractérisé en ce que** la force de friction par adhérence ou la force de décrochage est supérieure à la force de maintien des moyens exerçant une force (19).

6. Dispositif de protection selon l'une des revendications précédentes, **caractérisé en ce que** l'agencement de barrières lumineuses (17) comporte au moins deux barrières lumineuses (L1-L3) dans deux plans disposés l'un derrière l'autre dans la direction du mouvement de travail (A) et/ou perpendiculairement à celle-ci.

7. Dispositif de protection selon l'une des revendications précédentes, **caractérisé en ce que** l'agencement de barrières lumineuses (17) possède une autre barrière lumineuse (L4) disposée dans la trajectoire de la première partie de machine (11) ou d'un outil (10) placé sur celle-ci, laquelle barrière lumineuse peut être désactivée après positionnement correct de l'agencement de barrières lumineuses (17).

8. Dispositif de protection selon la revendication 7, **caractérisé en ce que** le dispositif de butée (21) possède des moyens de commutation pour désactiver l'autre barrière lumineuse (L4) à l'arrivée de l'agencement de barrières lumineuses (17).

9. Dispositif de protection selon la revendication 6, **caractérisé en ce que** le dispositif de commutation possède des moyens pour déclencher la désactivation séquentielle des barrières lumineuses (L1, L2), disposées au-dessous de la première partie de machine (11), lorsqu'est atteinte la position de butée, la désactivation commençant pour la barrière lumineuse (L1) la plus proche de la première partie de machine (11).

10. Dispositif de protection selon l'une des revendications précédentes, **caractérisé en ce qu'**un autre agencement de barrières lumineuses, constitué d'au moins une barrière lumineuse (L3), est disposé décalé latéralement par rapport à la au moins une barrière lumineuse (L1, L2) disposée au-dessous de la première partie de machine (11), et **en ce que** des moyens de mise à l'arrêt sont prévus pour désactiver cet autre agencement de barrières lumineuses (L3).

11. Dispositif de protection selon la revendication 10, **caractérisé en ce que** sont prévus des moyens de mise en marche automatique pour activer l'autre agencement de barrières lumineuses (L3) désactivé, lesquels moyens peuvent être déclenchés en particulier par le mouvement d'ouverture de la première partie de machine (11) ou par des interrupteurs de fin de course sur le dispositif de butée.
